# EUROPEAN PATENT SPECIFICATION

(11) **EP 3 039 736 B1**
(45) Date of publication and mention of the grant of the patent: **22.05.2019**
(21) Application number: 14840694.5
(22) Date of filing: 27.08.2014
(51) Int. Cl.: H01M 10/04, H01M 10/058, H01M 2/02, H01M 10/653, H01M 10/6567

(54) **BIPOLAR SOLID STATE BATTERY INSULATING PACKAGE**
ISOLIERGEHÄUSE FÜR BIPOLARE FESTSTOFFBATTERIE
CONDITIONNEMENT ISOLANT DE BATTERIE BIPOLAIRE À ÉLECTROLYTE SOLIDE

(30) Priority: 28.08.2013 US 201361870836 P
(43) Date of publication of application: 06.07.2016
(73) Proprietor: Robert Bosch GmbH, 70442 Stuttgart (DE)
(72) Inventor: CHRISTENSEN, John, F., Mountain View, CA 94043 (US); SCHUMANN, Bernd, 71277 Rutesheim (DE); LOHMANN, Timm, Mountain View, CA 94043 (US)
(86) International application number: PCT/US2014/052893
(87) International publication number: WO 2015/031469

(56) References cited:
- WO-A1-2007/060910
- WO-A1-2012/105160
- CN-A- 101 510 593
- JP-A- H08 255 615
- JP-A- 2006 261 009
- JP-A- 2008 186 595
- JP-A- 2009 193 729
- JP-A- 2009 252 548
- JP-A- 2010 034 002
- US-A1- 2011 287 292

## Description

### Field of the Disclosure

The present disclosure relates to batteries and more particularly to solid state batteries.

### Background

Rechargeable lithium-ion batteries are attractive energy storage systems for portable electronics and electric and hybrid-electric vehicles because of their high specific energy compared to other electrochemical energy storage devices. A typical Li-ion cell contains a negative electrode, a positive electrode, and a separator region between the negative and positive electrodes. Both electrodes contain active materials that insert or react with lithium reversibly. In some cases the negative electrode may include lithium metal, which can be electrochemically dissolved and deposited reversibly. The separator contains an electrolyte with a lithium cation, and serves as a physical barrier between the electrodes such that none of the electrodes are electronically connected within the cell.

Typically, during charging, there is generation of electrons at the positive electrode and consumption of an equal amount of electrons at the negative electrode, and these electrons are transferred via an external circuit. In the ideal charging of the cell, these electrons are generated at the positive electrode because there is extraction via oxidation of lithium ions from the active material of the positive electrode, and the electrons are consumed at the negative electrode because there is reduction of lithium ions into the active material of the negative electrode. During discharging, the exact opposite reactions occur.

Batteries with a lithium metal negative electrode afford exceptionally high specific energy (in Wh/kg) and energy density (in Wh/L) compared to batteries with conventional carbonaceous negative electrodes. However, the cycle life of such systems is rather limited due to (a) significant volume changes in the cell sandwich during every cycle as the Li metal is stripped and plated, (b) formation of dendrites during recharge that may penetrate the separator and short the cell and/or result in fragmentation and capacity loss of the negative electrode; (c) morphology changes in the metal upon extended cycling that result in a large overall volume change in the cell; and (d) changes in the structure and composition of the passivating layer that forms at the surface of the metal when exposed to certain electrolytes, which may isolate some metal and/or increase the resistance of the cell over time.

When high-specific-capacity negative electrodes such as a metal are used in a battery, the maximum benefit of the capacity increase over conventional systems is realized when a high-capacity positive electrode active material is also used. For example, conventional lithium-intercalating oxides (e.g., LiCoO₂, LiNi_{0.8}Co_{0.15}Al_{0.05}O₂, Li_{1.1}Ni_{0.3}Co_{0.3}Mn_{0.3}O₂) are typically limited to a theoretical capacity of ∼280 mAh/g (based on the mass of the lithiated oxide) and a practical capacity of 180 to 250 mAh/g, which is quite low compared to the specific capacity of lithium metal, 3863 mAh/g. The highest theoretical capacity for which some practical cycling has been achieved for a lithium-ion positive electrode is 1168 mAh/g (based on the mass of the lithiated material), which is shared by Li₂S and Li₂O₂. Other high-capacity materials include BiF₃ (303 mAh/g, lithiated), FeF₃ (712 mAh/g, lithiated), LiOH•H₂O (639 mAh/g), and others. Unfortunately, all of these materials react with lithium at a lower voltage compared to conventional oxide positive electrodes, hence limiting the theoretical specific energy; however, the theoretical specific energies are still very high (> 800 Wh/kg, compared to a maximum of ∼500 Wh/kg for a cell with lithium negative and conventional oxide positive electrodes).

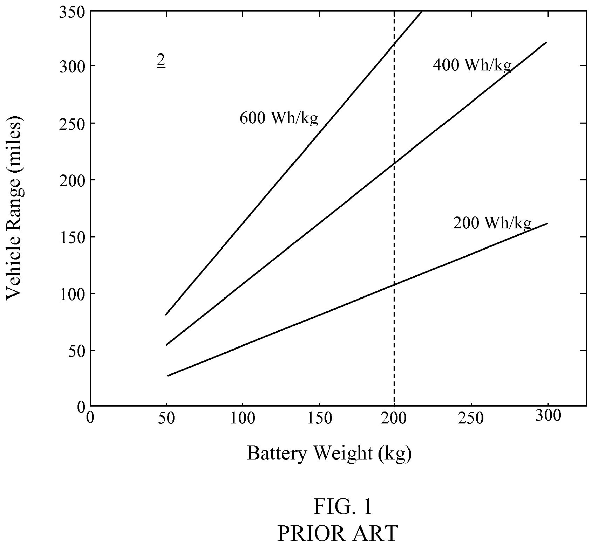

FIG. 1 depicts a chart 2 showing the range achievable for a vehicle using battery packs of different specific energies versus the weight of the battery pack. In the chart 10, the specific energies are for an entire cell, including cell packaging weight, assuming a 50% weight increase for forming a battery pack from a particular set of cells. The U.S. Department of Energy has established a weight limit of 200 kg for a battery pack that is located within a vehicle. Accordingly, only a battery pack with about 600 Wh/kg or more can achieve a range of 300 miles.

Lithium-based batteries have a sufficiently high specific energy (Wh/kg) and energy density (Wh/L) that they are now being used in electric-powered vehicles. However, in order to power a full-electric vehicle with a range of several hundred miles, a battery with a higher specific energy than the present state of the art (an intercalation system with a graphite anode and transition-metal oxide cathode) is necessary.

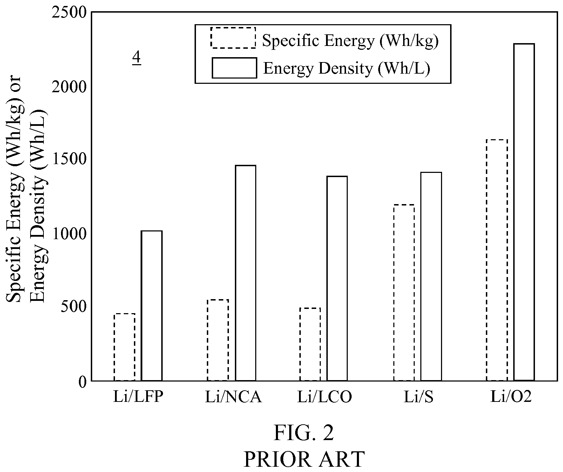

Some options which provide higher specific energy as compared to the currently utilized batteries are possible. For example, FIG. 2 depicts a chart 4 which identifies the specific energy and energy density of various lithium-based chemistries. In the chart 4, only the weight of the active materials, current collectors, binders, separator, and other inert material of the battery cells are included. The packaging weight, such as tabs, the cell can, etc., are not included. As is evident from the chart 4, the lithium-sulfur battery, which uses a lithium metal negative electrode and a positive electrode that reduces sulfur to form lithium sulfide, has a significantly higher specific energy than the present state of the art.

There are significant challenges that must be addressed for the lithium-sulfur system to become commercially viable. Important challenges include increasing the cycle life (current state of the art is 100 to several hundred cycles; target is >500, preferably >2000), increasing the utilization of sulfur (typical utilization is below 75% due to passivation of the positive electrode by Li₂S or Li₂S₂, which are electronically insulating), increasing the mass fraction of sulfur in the positive electrode (typically the mass fraction is below 50%), and increasing the rate capability of the cell (target discharge rate is 1C or higher). While some Li/S cells described in the literature fulfill some of the objectives for cycle life, specific energy, and specific power, none of these cells adequately address all of the issues as would be needed to realize a commercial cell. JP 2009 252548 A relates to a solid type battery comprising: a power generation element of a bipolar structure, in which two or more layers of power generation units with a positive electrode layer, a solid electrolyte membrane, and a negative electrode layer laminated in this order are laminated, a bipolar layer is arranged among the two or more power generation units, and further power collectors are respectively arranged on the outermost layer of the two or more layers of power generation units; a battery case which contains the power generation element; and a fluid seal layer which comprises a fluid sealant which allows the generation element to be immersed in the battery case and which has a property not to react the solid electrolyte membrane, wherein the fluid seal layer is airtightly divided into at least two or more layers by the bipolar layer. JP 2009 193729 A relates to a solid-state battery which has: a power generating element in which a positive electrode layer, a sulfide-based solid electrolyte membrane, and a negative electrode layer are laminated in this order; a sealed type battery case for housing the power generating element; and a fluidity seal material having characteristics of immerging the power generating element in the sealed type battery case, and of not reacting with the sulfide-based solid electrolyte membrane, wherein the solid-state battery has a solidification means for solidifying the fluidity seal material when the sealed type battery case is damaged. JP 2008 186595 A relates to a bipolar battery being a secondary battery with a unit cell, which has a positive-electrode active material layer and a negative-electrode active material layer that are respectively arranged on both sides of an electrolyte layer, and a coating layer that at least partially coats the unit cell 7. Reference is also made to document JP2006261009, which discloses a phase-change material comprising a thermally conductive and electronic insulating solid.

What is needed, therefore, is a solid state electrochemical cell which addresses one or more of the above identified issues.

### Summary

The invention is defined by the appended claims. Disclosed is a bipolar solid state battery includes a first cell stack including a first solid-electrolyte separator positioned between a first cathode and a first anode, a first base layer including a first base portion positioned directly beneath the first anode, a second cell stack including a second solid-electrolyte separator positioned between a second cathode and a second anode, a second base layer including a second base portion positioned directly beneath the second anode, and a thermally insulating medium surrounding the first cell stack and the second cell stack.

According to the invention, the thermally insulating medium comprises a thermally insulating fluid.

The battery includes an inner packaging layer surrounding the first cell stack and the second cell stack, and an outer packaging layer spaced apart from the inner packaging layer, and surrounding the first cell stack and the second cell stack, wherein the thermally insulating fluid is contained between the inner packaging layer and the outer packaging layer.

The thermally insulating fluid includes a thermally conductive and electronically insulating solid.

The insulating fluid can include a non-flammable oil.

The battery can include a cooling plate in thermal communication with the outer packaging layer.

The cooling plate can include a thermally controlled fluid within a cooling coil.

Disclosed is a method of forming a bipolar solid state battery includes providing a first cell stack including a first solid-electrolyte separator positioned between a first cathode and a first anode, positioning a first base portion of a first base layer directly beneath the first anode, providing a second cell stack including a second solid-electrolyte separator positioned between a second cathode and a second anode, positioning a second base portion of a second base layer directly beneath the second anode, and surrounding the first cell stack and the second cell stack with a thermally insulating medium.

Surrounding the first cell stack and the second cell stack can include surrounding the first cell stack and the second cell stack with a non-flammable fluid.

The method includes surrounding the first cell stack and the second cell stack with an inner packaging layer, and surrounding the inner packaging with an outer packaging layer spaced apart from the inner packaging layer, wherein surrounding the first cell stack and the second cell stack with a thermally insulating medium includes placing the thermally insulating fluid in a space between the inner packaging layer and the outer packaging layer.

The method includes placing a thermally conductive and electronically insulating solid in the thermally insulating fluid.

The method can include positioning a cooling plate in thermal communication with the outer packaging layer.

The method can include filling a cooling coil in the cooling plate with a thermally controlled fluid.

### Brief Description of the Drawings

FIG. 1 depicts a plot showing the relationship between battery weight and vehicular range for various specific energies;
FIG. 2 depicts a chart of the specific energy and energy density of various lithium-based cells;
FIG. 3 depicts a simplified cross sectional view of a stacked battery with some components omitted and with a bipolar design that includes an insulating/cooling packaging; and
FIG. 4 depicts a partial side perspective view of one of the cells of FIG. 3 showing a separator with an open cell microstructured composite separator with solid-electrolyte components in the form of columns which inhibits dendrite formation while allowing flexing of the anodes.

### Description

For the purpose of promoting an understanding of the principles of the disclosure, reference will now be made to the embodiments illustrated in the drawings and described in the following written description. It is understood that no limitation to the scope of the disclosure is thereby intended.

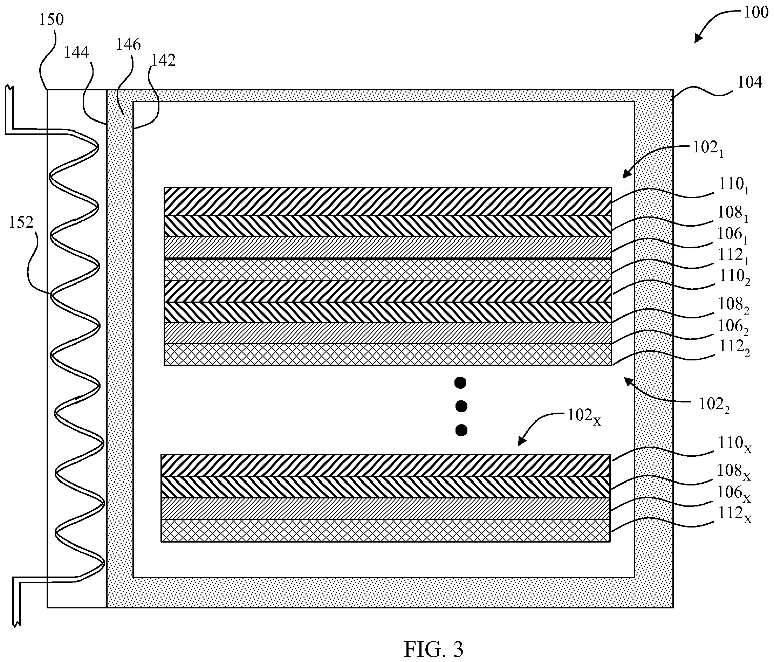

FIG. 3 depicts an electrochemical battery 100. The electrochemical battery 100 includes a number of cells or cell stacks 102_{X} within a packaging 104 or other surrounding environment that is both electrically insulating and (optionally) thermally conductive. The packaging 104 improves the safety of the electrochemical battery 100.

Each of the cells 102_{X} includes an anode 106_{X}, a separator 108_{X}, and a cathode 110_{X}. A base layer 112_{X}, which is typically metal such as copper and can serve as a current collector is positioned adjacent to the anode 106_{X} and between the anode 106_{X} and an adjacent cathode. For example, the base layer 112₁ is located between the anode 106₁ and the cathode 110₂.

The anodes 106_{X} include lithium metal or a lithium alloy metal. The anodes 106_{X} are sized such that they have at least as much capacity as the associated cathode 110_{X}, and preferably at least 10% excess capacity and up to greater than 50% capacity in some embodiments.

The cathodes 110_{X} in one embodiment are a dense layer of active Li-insertion material. In some embodiments the cathodes 110_{X} include a sulfur or sulfur-containing material (e.g., PAN-S composite or Li₂S); an air electrode; Li-insertion materials such as NCM, LiNi_{0.5}Mn_{1.5}O₄, Li-rich layered oxides, LiCoO₂, LiFePO₄, LiMn₂O₄; Li-rich NCM, NCA, and other Li intercalation materials, or blends thereof or any other active material or blend of materials that react with and/or insert Li cations and/or electrolyte anions. The cathodes 110_{X} include Li-conducting polymer, ceramic or other solid, non-polymer electrolyte. The cathode Li-insertion materials may additionally be coated (e.g., via spray coating) with a material such as LiNbO₃ in order to improve the flow of ions between the Li-insertion materials and the solid electrolyte, as described in T. Ohtomo et al., Journal of Power Sources 233 (2013) 231-235. Solid electrolyte materials in the cathodes 110_{X} may further include lithium conducting garnets, lithium conducting sulfides (e.g., Li₂S-P₂S₅) or phosphates, Li₃P, LIPON, Li-conducting polymer (e.g., PEO), Li₇₋ₓLa₃TaₓZr₂₋ₓO₁₂, wherein 0≤X≤2, Li-conducting metal-organic frameworks such as described by Wiers et al. "A Solid Lithium Electrolyte via Addition of Lithium Isopropoxide to a Metal-Organic Framework with Open Metal Sites," Journal of American Chemical Society, 2011, 133 (37), pp 14522-14525, thio-LISiCONs, Li-conducting NaSICONs, Li₁₀GeP₂S₁₂, lithium polysulfidophosphates, or other solid Li-conducting material. Other solid electrolyte materials that may be used are described in Christensen et al., "A critical Review of Li/Air Batteries", Journal of the Electrochemical Society 159(2) 2012. Other materials in the cathodes 110_{X} may include electronically conductive additives such as carbon black, and a binder material. The cathode materials are selected to allow sufficient electrolyte-cathode interfacial area for a desired design.

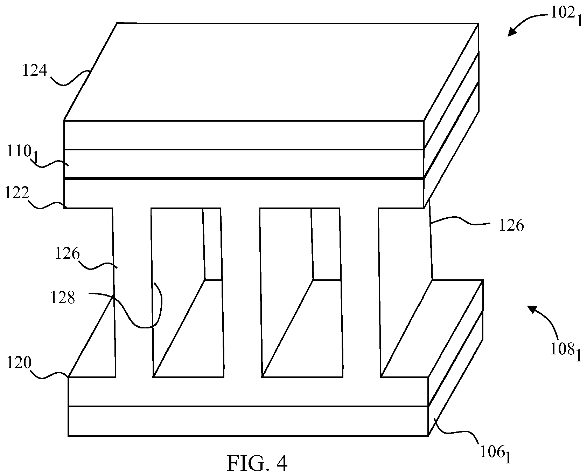

In some embodiments, the separators 108_{X} are microstructured composite separators which conduct lithium ions between the anodes 106_{X} and the cathodes 110_{X} while blocking electrons. For example, FIG. 4 depicts a partial perspective view of the cell 102₁ which includes a layer 120 adjacent to the anode 106₁ and a layer 122 adjacent to the cathode 110₁. A current collector 124 is also shown which may be made of aluminum and is provided in some embodiments, and may be separated from an adjacent base layer 112_{X} by a layer of electrically conductive but chemically inactive material such as graphite. A number of solid-electrolyte components in the form of columns 126 extend between the layer 120 and the layer 122 defining microstructure cavities 128 therebetween.

The microstructured composite separator 108_{X} thus consists of regularly spaced solid-electrolyte components 126 which provide sufficient ionic transport (i.e., by providing a sufficiently high volume fraction of conducing material and by limiting the thickness of the structure between the anode and cathode) and provide mechanical resistance to suppress the formation and growth of lithium dendrites in the anode 106_{X}. In the embodiment of FIG. 4, solid-electrolyte components 108_{X} are flexible so as to accommodate volume change of the electrodes.

While three columns 126 are shown in FIG. 4, there are more or fewer solid-electrolyte components in other embodiments. In other embodiments, the solid-electrolyte components may be configured in other forms. In some embodiments, the microstructure cavities 128 may be filled with different compositions to provide a desired flexibility and/or to otherwise modify mechanical properties of the microstructured composite separator. More details regarding the microstructured composite separator 108_{X}, and other alternative separator configurations, are provided in published patent application US2015050543.

By stacking the cells 102_{X} in the bipolar design of FIG. 3, the operating voltage of the battery 100 can be modified to the desired voltage. By way of example, if each cell 102_{X} has an operating voltage of ∼4 V, 100 cells 102_{X} can be stacked to produce a device that has an operating voltage of -400 V. In this way, a given power can be achieved while passing a low current through each of the cells 102_{X}. Therefore, wiring of the cells 102_{X} can be achieved with small-diameter electrical conductors while maintaining high energy efficiency. The battery 100 thus provides an operating voltage greater than 5 V, and in some embodiments, greater than 50 V.

The packaging 104 is electrically insulating and includes an inner packaging layer 142 and an outer packaging layer 144. An insulating liquid 146 (such as nonflammable oil) fills the space in between the two layers of packaging. Examples of nonflammable oils include DuPont's Krytox ® Fluorinated oils for lubrication, Halocarbon's inert lubricants, etc. In general, these lubricants (described as oils, greases, and or waxes) are halogenated. The insulation 146 contains thermally conductive solids such as oxides (e.g., magnesium oxide) that are electronically insulating in order to improve the rate of heat transfer to and from the cell stack during operation of the energy storage device.

In the embodiment of FIG. 3, one side of the packaging 104 is connected to a cooling medium or cooling plate 150 (e.g., aluminum block). In other embodiments, more sides of the packaged cell stack are connected to a cooling medium or cooling plate while in some embodiments the cooling plate is omitted. In one embodiment an oxide layer (not shown) is positioned in between the cell stack and the cooling medium or cooling plate.

The cooling plate 150 is thermally controlled by a fluid (air, water, or other heat-transfer fluid, such as ethylene glycol) which flows through a cooling coil 152. The coil 152 is used to remove heat via a radiator or other heat exchanger and/or may absorb heat from a heater. In some embodiments, the fluid is air which is incorporated into the heating/air-conditioning system of the vehicle or device that uses the energy storage system. In some embodiments, a fan or blower forces air through or along the surface of the cooling plate and/or battery. Seals (e.g., polymer O-rings) may be incorporated into the cell packaging such that the electronically insulating fluid does not evaporate or otherwise escape from the cell packaging.

While FIG. 3 depicts a single stack of cells 102_{X}, a number of cell stacks can be connected to one another electrically, either in parallel, or series, or both. The cell stacks may be packaged separately and/or may use a common packaging, including the electronically insulating/cooling material. Each cell or cell stack includes a positive and negative terminal (not shown) to which an electronic conductor can be connected, in order to connect the cell stack to other cell stacks and/or to the terminals of the battery.

The above described embodiments provide a safe energy-storage system with high voltage enabled by multiple cell sandwiches stacked in series and an electronically insulating material or medium incorporated into the cell packaging. Improved cooling and heating of the energy storage system is enabled by thermally conductive material incorporated into the packaging.

While the disclosure has been illustrated and described in detail in the drawings and foregoing description, the same should be considered as illustrative and not restrictive in character. It is understood that only the preferred embodiments have been presented and that all changes, modifications and further applications that come within the scope of the claims are desired to be protected.

## Claims

1. A bipolar solid state battery (100), comprising:
a first cell stack (102₁) including a first solid-electrolyte separator (108₁) positioned between a first cathode (110₁) and a first anode (106₁);
a first base layer (112₁) including a first base portion positioned directly beneath the first anode (106₁);
a second cell stack (102₂) including a second solid-electrolyte separator (108₂) positioned between a second cathode (110₂) and a second anode (106₂);
a second base layer (112₂) including a second base portion positioned directly beneath the second anode (106₂),
**characterized in that**
an inner packaging layer (142) is surrounding the first cell stack (102ᵢ) and the second cell stack (102₂); and
an outer packaging layer (144) spaced apart from the inner packaging layer (142), and surrounding the first cell stack (102₁) and the second cell stack (102₂), wherein a thermally insulating fluid (146) is contained between the inner packaging layer (142) and the outer packaging layer (144),
wherein the thermally insulating fluid (146) comprises:
a thermally conductive and electronically insulating solid.

2. The battery (100) of claim 1, wherein the insulating fluid comprises:
a non-flammable oil.

3. The battery (100) of claim 2, further comprising:
a cooling plate (150) in thermal communication with the outer packaging layer (144).

4. The battery (100) of claim 3, wherein the cooling plate (150) comprises:
a thermally controlled fluid within a cooling coil.

5. A method of forming a bipolar solid state battery (100), comprising:
providing a first cell stack (102₁) including a first solid-electrolyte separator (108₁) positioned between a first cathode (110₁) and a first anode (106₁);
positioning a first base portion of a first base layer (112₁) directly beneath the first anode (106₁);
providing a second cell stack (102₁) including a second solid-electrolyte separator (108x) positioned between a second cathode (110₂) and a second anode (106₂);
positioning a second base portion of a second base layer (112₂) directly beneath the second anode (106₂),
**characterized by**
surrounding the first cell stack (102₁) and the second cell stack (102₂) with an inner packaging layer (142); and
surrounding the inner packaging with an outer packaging layer (144) spaced apart from the inner packaging layer (142); and
surrounding the first cell stack (102₁) and the second cell stack (102₂) with a thermally insulating medium by
placing a thermally insulating fluid (146) comprising a thermally conductive and electronically insulating solid in a space between the inner packaging layer (142) and the outer packaging layer (144).

6. The method of claim 5, wherein the thermally insulating fluid is a non-flammable fluid.

7. The method of claim 5, further comprising:
positioning a cooling plate (150) in thermal communication with the outer packaging layer (144).

8. The method of claim 7, further comprising:
filling a cooling coil in the cooling plate (150) with a thermally controlled fluid.

## Patentansprüche

1. Bipolare Feststoffbatterie (100), umfassend:
einen ersten Zellenstapel (102₁), der ein erstes Festelektrolyttrennelement (108₁) enthält, das zwischen einer ersten Kathode (110₁) und einer ersten Anode (106₁) angebracht ist;
eine erste Basisschicht (112₁), die einen ersten Basisabschnitt enthält, der direkt unter der ersten Anode (106₁) angebracht ist;
einen zweiten Zellenstapel (102₂), der ein zweites Festelektrolyttrennelement (108₂) enthält, das zwischen einer zweiten Kathode (110₂) und einer zweiten Anode (106₂) angebracht ist;
eine zweite Basisschicht (112₂), die einen zweiten Basisabschnitt enthält, der direkt unter der zweiten Anode (106₂) angebracht ist;
**dadurch gekennzeichnet, dass**
eine innere Packungsschicht (142) den ersten Zellenstapel (102₁) und den zweiten Zellenstapel (102₂) umgibt; und
eine äußere Packungsschicht (144) sich in einem Abstand von der inneren Packungsschicht (142) befindet und den ersten Zellenstapel (102₁) und den zweiten Zellenstapel (102₂) umgibt, wobei ein thermisch isolierendes Medium (146) zwischen der inneren Packungsschicht (142) und der äußeren Packungsschicht (144) enthalten ist,
wobei das thermisch isolierende Medium (146) umfasst:
einen thermisch leitfähigen und elektronisch isolierenden Feststoff.

2. Batterie (100) nach Anspruch 1, wobei das isolierende Medium umfasst:
ein nichtbrennbares Öl.

3. Batterie (100) nach Anspruch 2, die außerdem umfasst:
eine Kühlplatte (150) in einer thermischen Kommunikation mit der äußeren Packungsschicht (144).

4. Batterie (100) nach Anspruch 3, wobei die Kühlplatte (150) umfasst:
ein thermisch geregeltes Medium in einer Kühlspule.

5. Verfahren zum Gestalten einer Feststoffbatterie (100), umfassend:
Bereitstellen eines ersten Zellenstapels (102₁), der ein erstes Festelektrolyttrennelement (108₁) enthält, das zwischen einer ersten Kathode (110₁) und einer ersten Anode (106₁) angebracht ist;
Anbringen eines ersten Basisabschnitts einer ersten Basisschicht (112₁) direkt unter der ersten Anode (106₁) ;
Bereitstellen eines zweiten Zellenstapels (102₁), der ein zweites Festelektrolyttrennelement (108x) enthält, das zwischen einer zweiten Kathode (110₂) und einer zweiten Anode (106₂) angebracht ist;
Anbringen eines zweiten Basisabschnitts einer zweiten Basisschicht (112₂) direkt unter der zweiten Anode (106₂);
**gekennzeichnet durch**:
Umgeben des ersten Zellenstapels (102ᵢ) und des zweiten Zellenstapels (102₂) mit einer inneren Packungsschicht (142); und
Umgeben der inneren Packung mit einer äußeren Packungsschicht (144) in einem Abstand von der inneren Packungsschicht (142); und
Umgeben des ersten Zellenstapels (102ᵢ) und des zweiten Zellenstapels (102₂) mit einem thermisch isolierenden Medium, indem ein thermisch isolierendes Medium (146), das einen thermisch leitfähigen und elektronisch isolierenden Feststoff umfasst, in einem Raum zwischen der inneren Packungsschicht (142) und der äußeren Packungsschicht (144) angebracht wird.

6. Verfahren nach Anspruch 5, wobei das thermisch isolierende Medium ein nichtbrennbares Medium ist.

7. Verfahren nach Anspruch 5, das außerdem umfasst:
Anbringen einer Kühlplatte (150) in einer thermischen Kommunikation mit der äußeren Packungsschicht (144).

8. Verfahren nach Anspruch 7, das außerdem umfasst:
Füllen einer Kühlspule in die Kühlplatte (150) mit einem thermisch geregelten Medium.

## Revendications

1. Batterie bipolaire à électrolyte solide (100) comprenant :
un premier empilement de cellules (102₁) comprenant un premier séparateur d'électrolyte solide (108₁), positionné entre une première cathode (110₁) et une première anode (106₁) ;
une première couche de base (112₁) comprenant une première partie de base positionnée directement en dessous de la première anode (106₁) ;
un second empilement de cellules (102₂) comprenant un second séparateur d'électrolyte solide (108₂) positionné entre une seconde cathode (110₂) et une seconde anode (106₂) ;
une seconde couche de base (112₂) comprenant une seconde partie de base positionnée directement en dessous de la seconde anode (106₂),
**caractérisée en ce que**
une couche d'encapsulation interne (142) entoure le premier empilement de cellules (102₁) et le second empilement de cellules (102₂) ; et
une couche d'encapsulation externe (144) espacée de la couche d'encapsulation interne (142) et entourant le premier empilement de cellules (102₁) et le second empilement de cellules (102₂), dans laquelle un fluide thermo-isolant (146) est contenu entre la couche d'encapsulation interne (142) et la couche d'encapsulation externe (144),
dans laquelle le fluide thermo-isolant (146) comprend :
un solide thermoconducteur et électroniquement isolant.

2. Batterie (100) selon la revendication 1, dans laquelle le fluide isolant comprend :
une huile non inflammable.

3. Batterie (100) selon la revendication 2, comprenant en outre :
une plaque de refroidissement (150) en communication thermique avec la couche d'encapsulation externe (144).

4. Batterie (100) selon la revendication 3, dans laquelle la plaque de refroidissement (150) comprend :
un fluide régulé thermiquement à l'intérieur d'une bobine de refroidissement.

5. Procédé de façonnage d'une batterie bipolaire à électrolyte solide (100) consistant :
à fournir un premier empilement de cellules (102ᵢ) comprenant un premier séparateur d'électrolyte solide (108₁), positionné entre une première cathode (110₁) et une première anode (106₁) ;
à positionner une première partie de base d'une première couche de base (112₁) directement en dessous de la première anode (106₁) ;
à fournir un second empilement de cellules (102₁) comprenant un second séparateur d'électrolyte solide (108x) positionné entre une seconde cathode (110₂) et une seconde anode (106₂) ;
à positionner une seconde partie de base d'une seconde couche de base (112₂) directement en dessous de la seconde anode (106₂),
**caractérisé en ce qu'**il consiste
à entourer le premier empilement de cellules (102ᵢ) et le second empilement de cellules (102₂) avec une couche d'encapsulation interne (142) ; et
à entourer l'encapsulation interne avec une couche d'encapsulation externe (144) espacée de la couche d'encapsulation interne (142) ; et
à entourer le premier empilement de cellules (102ᵢ) et le second empilement de cellules (102₂) avec un milieu thermo-isolant en plaçant un fluide thermo-isolant (146) comprenant un solide thermoconducteur et électroniquement isolant dans un espace entre la couche d'encapsulation interne (142) et la couche d'encapsulation externe (144).

6. Procédé selon la revendication 5, dans lequel le fluide thermo-isolant est un fluide non inflammable.

7. Procédé selon la revendication 5, consistant en outre :
à positionner une plaque de refroidissement (150) en communication thermique avec la couche d'encapsulation externe (144).

8. Procédé selon la revendication 7, consistant en outre :
à remplir une bobine de refroidissement dans la plaque de refroidissement (150) d'un fluide régulé thermiquement.
